# EUROPÄISCHE PATENTSCHRIFT

(11) **EP 4 411 150 B1**
(45) Veröffentlichungstag und Bekanntmachung des Hinweises auf die Patenterteilung: **18.06.2025**
(21) Anmeldenummer: 24152282.0
(22) Anmeldetag: 17.01.2024
(51) Int. Cl.: F16B 5/06

(54) **BEFESTIGUNGSKLEMME**
FASTENING CLAMP
PINCE DE FIXATION

(30) Priorität: 31.01.2023 DE 202023100439 U
(43) Veröffentlichungstag der Anmeldung: 07.08.2024
(73) Patentinhaber: OBO Bettermann Hungary Kft., 2347 Bugyi (HU)
(72) Erfinder: TÓTH, Viktor, 5000 Szolonok (HU)
(74) Vertreter: Haverkamp Patentanwälte PartG mbB

(56) Entgegenhaltungen:
- DE-U1- 202012 005 671
- TW-B- I 716 248
- US-A1- 2022 216 823

## Beschreibung

Gegenstand der Erfindung ist eine Befestigungsklemme zum Befestigen eines langgestreckten, biegesteifen Gegenstandes, etwa eines Trägerprofiles, eines Paneels, etwa eines Photovoltaik-Moduls, einer Komponente dafür oder dergleichen, an einer aus typischerweise mehreren Trägern gebildeten Unterkonstruktion.

Es gibt zahlreiche Anwendungen, bei denen Paneele als beispielhafte langgestreckte, biegestreife Gegenstände an einem Träger zu befestigen sind. Einer dieser Anwendungen ist die Befestigung von Photovoltaik-Modulen oder Solarpaneelen an einem aus mehreren Trägern bereitgestellten Tragegerüst. Befestigt werden Photovoltaik-Module an solchen Trägern mit Befestigungsklemmen. Diese werden seitlich zu einem zu befestigenden Paneel angeordnet und dienen dem Zweck, ein solches Paneel mit dem Träger zu verspannen. Zu diesem Zweck verfügt eine solche Befestigungsklemme über ein Anschlussteil. Das Anschlussteil trägt ein oder mehrere Anschlussorgane zum Anschließen des Anschlussteils und damit der Befestigungsklemme an einen solchen Träger. Die Anschlussorgane können ausgebildet sein, um den oberen Abschluss eines Trägers außenseitig zu umfassen, beispielsweise den oberen Gurt eines I-Trägers. Gemäß einer anderen Ausgestaltung sind die Anschlussorgane ausgebildet, damit diese in eine der Längserstreckung des Trägers folgende Nut eingebracht werden können. In beiden Fällen sind die Anschlussorgane ausgelegt, den Träger mit ihren Anschlussorganen klauenartig zu hintergreifen. Ist das Anschlussteil einer solchen Befestigungsklemme an einen Träger angeschlossen, ist durch das klauenartige Hintergreifen ein trägerseitiges Spannwiderlager bereitgestellt.

Neben dem Anschlussteil verfügt eine solche Befestigungsklemme über ein Klemmelement. Dieses ist in Spannwirkrichtung der Befestigungsklemme gegenüber dem Anschlussteil einrichtbar und damit verstellbar. Das Klemmelement umfasst einen Klemmschenkel mit einem daran angeformten Klemmfortsatz. Der Klemmfortsatz dient zum Übergreifen des oberen seitlichen Randes eines auf den Träger der Unterkonstruktion aufgelegten Paneels und bildet damit das mit dem trägerseitigen Spannwiderlager zusammenwirkende paneelseitige Spannwiderlager zum Befestigen eines solchen Paneels an dem Träger. Für die Bereitstellung des paneelseitigen Widerlagers mit dem Klemmfortsatz ist eine flächige Anlage gewünscht. Ist eine solche Befestigungsklemme als Seitenklemme vorgesehen, sodass mit dieser nur der Rand eines Paneels verspannt werden soll, verfügt die Befestigungsklemme ferner über einen Stützschenkel. Typischer Weise ist dieser an den Klemmschenkel des Klemmelementes angeformt. Dieser erstreckt sich in Spannwirkrichtung und bildet mit dem Klemmschenkel ein Winkelstück. Der Stützschenkel dient zum Abstützen des Klemmelementes an einem Stützwiderlager des Anschlussteils, um beim Spannen des Klemmelementes gegen das Anschlussteil bei auf der Oberseite des Paneels abgestütztem Klemmfortsatz ein Verkippen des Klemmschenkels mit seinem Klemmfortsatz zu unterbinden.

Als Spanneinrichtung dient bei einer solchen Befestigungsklemme zumeist ein Spannbolzen, der mit einer Spannmutter zusammenwirkt. Der Spannbolzen durchgreift den Klemmschenkel des Klemmelementes, ist mit seinem Kopf auf der Oberseite des Klemmschenkels abgestützt und kämmt ein dem Anschlussteil zugeordnetes Innengewinde, welches die Spannmutter bildet.

Eine Befestigungsklemme, wie vorstehend beschrieben, ist beispielsweise aus DE 20 2011 107 843 U1 oder EP 3 040 640 B1 bekannt. Das Stützwiderlager des Anschlussteils ist in beiden Fällen durch eine Zahnreihe bereitgestellt, in die eine an der Innenseite des Stützschenkels des Klemmelementes angeformte komplementäre Zahnreihe eingreift. Durch die Bereitstellung eines solchen Stützwiderlagers und der entsprechenden Abstützung des Stützschenkels daran ist eine Einrichtung des Abstandes zwischen dem Klemmfortsatz des Klemmelementes und dem Anschlussteil möglich. Mit einer solchen Befestigungsklemme lassen sich Photovoltaik-Module beispielsweise unterschiedlicher Höhe (Dicke) an einem Träger befestigen, wobei durch die Einrichtbarkeit zwischen Klemmelement und Anschlussteil die gewünschte Raumlage des Klemmelementes mit seinem Klemmfortsatz gegenüber der Oberseite des Photovoltaik-Moduls als beispielhaften Gegenstand in seiner bestimmungsgemäßen Raumlage verbleibt. Infolge der Abstützung des Klemmelementes über seinen Stützschenkel auf der Abstützung des Anschlussteils ist ein Verkippen des Klemmelementes unterbunden.

Aus EP 3 153 793 B1 ist eine exzentrisch zum Profil der Unterkonstruktion zu spannende Befestigungsklemme bekannt. Hierfür ist es erforderlich, dass der Träger der Unterkonstruktion, angeformt an eine seine Anlagefläche begrenzende Seitenwand, einen hinterschnittenen Steg aufweist. Dieser stellt das trägerseitige Spannwiderlager dar. Dieser Steg ist im Querschnitt klauenartig ausgeführt, wobei die Klauenöffnung von der Anlagefläche wegweist. Als Anschlussorgan verfügt das Anschlussteil über eine komplementär hinsichtlich ihrer Geometrie ausgelegte Klaue. Diese greift ein in den Hinterschnitt des trägerseitigen Profils. Zur Sicherung des klauenartigen in Eingriffsstellens zwischen der Klaue des Anschlussteils und dem Steg des Trägers ist eine zusätzliche Verriegelung erforderlich, und zwar entweder, indem die Klaue des Anschlussteils durch einen Steg begrenzt ist oder an diese ein klippsartig mit einem anderen Steg des Profils in Eingriff zu stellender Sicherungsriegel vorgesehen ist. Um die Spannwirkachse möglichst in den Träger hinein zu verlagern, ist der Spannarm des Anschlussteils mit einem spitzen Winkel geneigt. Der Spannarm wirkt nach Art eines Zugankers zur Breitstellung des trägerseitigen Spannwiderlagers.

Die vorstehend beschriebenen Befestigungsklemmen können nur an solche Träger einer Unterkonstruktion angeschlossen werden, die entweder eine der Längserstreckung des Trägers verlaufende beidseitig hinterschnittene Montagenut oder in den beiden an die Auflagefläche grenzenden Seitenwände außenseitig eingebrachte, ebenfalls in Längserstreckung des Trägers verlaufende Nuten oder anderweitige Hinterschneidungen aufweist. Bei diesem Träger handelt es sich typischerweise um stranggepresste Hohlkammerprofile aus einem hierfür geeigneten Aluminiumwerkstoff. Derartige Profile sind kostenträchtig. Bei Unterkonstruktionen zum Tragen von langgestreckten, biegesteifen Gegenständen, wie beispielsweise von Photovoltaik-Modulen, Solarpaneelen wäre es wünschenswert, wenn zur Ausbildung der Unterkonstruktion auch kostengünstigere Träger eingesetzt werden könnten. Diese sind typischerweise nicht als Hohlkammerprofil ausgebildet, sondern weisen beispielsweise eine C-förmige Querschnittsgeometrie auf. Bei derartigen Profilen kann es sich um Stahlblechprofile mit einer entsprechenden Beschichtung, beispielsweise feuerverzinkt, handeln. Die aus dem Stand der Technik bekannten Befestigungsklemmen eignen sich nicht für einen Anschluss an ein derartiges Profil.

US 2022/0216823 A1 offenbart eine Befestigungsanordnung zum Befestigen von Solarpaneelen an C-förmigen Trägerprofilen. Diese Befestigungsanordnung umfasst eine sich quer zur Längserstreckung der Trägerprofile über mehrere Trägerprofile erstreckende Profilschiene. Die Profilschiene hat eine hutförmige Querschnittsgeometrie. Neben dieser Profilschiene umfasst die Befestigungsanordnung mehrere nach Art einer Befestigungsklemme ausgeführte Befestiger. Diese durchgreifen mit einem Spannbolzen die Profilschiene. Ein die für den Durchgriff des Spannbolzens vorgesehene Bohrung in der Profilschiene überkragender Kopf bildet das eine Spannwiderlager. Das andere Spannwiderlager wird durch ein Anschlussteil bereitgestellt, welches mit seinem Widerlager an der freien Stirnfläche einer Rückkantung des Trägerprofils abgestützt ist. Das Anschlussteil verfügt über eine Stützfläche, die sich in etwa in derselben Ebene befindet, wie die Anlagefläche des Trägerprofils. Auf der Stützfläche ist ein durch die Profilschiene fixiertes Solarpaneel abgestützt. Die Profilschienen selbst werden durch auf der Anlagefläche der Trägerprofile angeordnete und mit diesen durch Schraubverbindungen gehaltene Abstandselemente in Position gehalten. Eine solche Befestigungsanordnung ist wenig universell einsetzbar. Zudem wäre es wünschenswert, wenn die Spannkraft unabhängig von der Widerlageranordnung aufgebracht werden könnte.

Vor diesem Hintergrund besteht das Bedürfnis nach einer verbesserten Befestigungsklemme zum Befestigen eines langgestreckten, biegesteifen Gegenstandes an einem aus zumindest zwei voneinander beabstandeten Trägern der vorstehend genannten Art gebildeten Unterlager. Der Erfindung liegt somit die Aufgabe zugrunde, eine solche Befestigungsklemme vorzuschlagen.

Gelöst wird diese Aufgabe erfindungsgemäß durch eine Befestigungsklemme mit den Merkmalen des Anspruchs 1.

Diese Befestigungsklemme verfügt über ein Anschlussteil, welches ausgebildet ist, um seitlich, das heißt: aus einer Richtung quer zu seiner Längserstreckung an einen Träger angeschlossen werden zu können. Zu diesem Zweck ist das Anschlussorgan des Anschlussteils ausgebildet, denjenigen Teil des Trägers, dessen Oberseite die Anlagefläche für den zu befestigenden Gegenstand bildet, zu untergreifen und an dieser, in die entgegengesetzte Richtung der Anlagefläche des Trägers weisenden Seite in der Spannstellung der Befestigungsklemme abgestützt zu sein. Insofern verfügen das Anschlussorgan ebenso wie der Träger des Unterlagers über komplementäre Widerlager. Das Anschlussteil verfügt des Weiteren über eine benachbart zu seinem Anschlussorgan und benachbart zu dem Träger angeordnete Stützfläche. In der Spannstellung der Befestigungsklemme dient die Stützfläche dem Zweck, dass ein an dem Träger zu befestigender Gegenstand und/oder im Falle einer Auslegung der Befestigungsklemme als Seitenklemme der Stützschenkel des Klemmelementes darauf abgestützt ist. Insofern wird der die Anlagefläche bereitstellende Teil des Profils zwischen dem Widerlager des Anschlussorgans und dem auf der Anlagefläche zu befestigenden Gegenstand sowie ggf. dem Stützschenkel des Klemmelementes schraubzwingenähnlich eingespannt. Dabei bewirkt die gleichzeitige Abstützung des zu befestigenden Gegenstandes und/oder des Stützschenkels auf der Stützfläche des Anschlussteils, dass trotz exzentrischem Spannen das Anschlussorgan in seiner bestimmungsgemäßen Widerlagerstellung verbleibt.

Die Auslegung des Anschlussorgans des Anschlussteils ist nach Art eines Hakenelements ausgeführt. Hierdurch ist nicht nur eine Einleitung der Klemmkraft verbessert, sondern ein solches Anschlussorgan kann auch Strukturen des Trägers hintergreifen, wie beispielsweise eine Rückkantung eines C-förmig profilierten Trägers. Das freie Ende eines solchen hakenförmigen Anschlussorgans bildet somit das Widerlager zum Abstützen an derjenigen Schenkelinnenseite des Trägers, der mit seiner Außenseite die Anlagefläche bereitstellt. Überdies lässt sich ein solches Anschlussorgan besonders stabil auslegen. Durch die hakenförmige Auslegung eines Anschlussorgans, dem das anschlussteilseitige Widerlager durch das bzw. die Enden der Hakenform bereitgestellt sind, ist die Einleitung der Spannkraft in den Träger verbessert.

Mittels einer der Befestigungsklemme zugehörigen Spanneinrichtung ist das Klemmelement gegenüber dem Anschlussteil hinsichtlich seines Abstandes zu diesem einrichtbar. Ferner wird über diese die Klemmkraft zum Verspannen des zu befestigenden Gegenstandes an dem Träger aufgebracht, mithin diejenige Kraft, mit der der Klemmfortsatz des Klemmelementes auf den zu befestigenden Gegenstand wirkt. Die Spanneinrichtung ist so angeordnet und ausgerichtet, dass die Spannwirkachse des Spannmittels, beispielsweise eines Gewindebolzens, bei dem die Spannwirkachse seine Längsachse ist, an dem seitlichen Abschluss des Schenkels des Trägers, an den die Befestigungsklemme angeschlossen ist, vorbeigeführt ist. Die Spannwirkachse ist gemäß einem bevorzugten Ausführungsbeispiel rechtwinklig zu der Ebene, die durch die Anlagefläche des Trägers und die Stützfläche des Anschlussteils aufgespannt ist. In Bezug auf die Spannwirkachse der Spanneinrichtung befinden sich die Stützfläche des Anschlussteils - einerseits - und das an dem Träger abgestützte Widerlager des Anschlussorgans - andererseits - an einander gegenüberliegenden Seiten. Ausgenutzt werden bei der erfindungsgemäßen Befestigungsklemme in geschickter Weise die biegesteifen Eigenschaften des langgestreckten Gegenstandes, beispielsweise eines zu befestigenden Photovoltaik-Moduls oder Solarpaneels. Da der Klemmfortsatz des Klemmelementes auf der Oberseite des zu befestigenden Gegenstandes abgestützt ist, besteht trotz Vorsehens einer neben dem Träger befindlichen Spannwirkachse beim Spannen nicht die Gefahr, dass der langgestreckte Gegenstand, der auf dem Unterlager stabil aufliegt, gebogen, durchgebogen oder gekippt werden kann, was zu einer Beeinträchtigung der gewünschten Befestigung führen würde. Diese Biegesteifigkeit gewährleistet eine Abstützung des zu befestigenden Gegenstandes und/oder des Stützschenkels des Klemmelementes, der ohnehin biegesteif ist, gleichermaßen an der Anlagefläche des Trägers sowie auf der Stützfläche des Anschlussteils.

Infolge des vorbeschriebenen Anschlusses der Befestigungsklemme an einen Träger können unter Ausnutzung der biegesteifen Eigenschaften zumindest eines daran zu befestigenden Gegenstandes mit dieser Befestigungsklemme auch zum Befestigen von Photovoltaik-Modulen, Solarpaneelen oder dergleichen oder auch andere langgestreckter, biegesteifer Gegenstände als Unterlager Träger anderer Art, als dieses bisher möglich war, eingesetzt werden. Man ist daher nicht auf eine Verwendung von stranggepressten Profilen als Träger angewiesen. Durchaus kann eine solche Befestigungsklemme auch zum Aufbau eines Trägergerüstes an Knotenpunkten zum Verspannen eines gegenüber einem unteren Träger querlaufenden Trägers genutzt werden.

Vorzugsweise wird man bei einer Ausgestaltung des Anschlussteils die Stützfläche so auslegen, dass sich diese bei an den Träger angeschlossener Befestigungsklemme in derselben Ebene befindet wie die Anlagefläche des Trägers. In einem Ausführungsbeispiel einer Befestigungsklemme mit einem solchen Anschlussteil befindet sich nur die Stützfläche in derselben Ebene wie die Anlagefläche des Trägers, während die daran angrenzenden Abschnitte des Anschlussteils gegenüber der Oberseite der Stützfläche zurückversetzt sind. Bei einer solchen Auslegung des Anschlussteils ist dieses ohne weiteres als Stanz-Biegeteil herstellbar. Bei einer solchen Ausgestaltung können die unterschiedlichen Ebenen von Stützfläche und den übrigen Bestandteilen des Anschlussteils durch eine Verkröpfung miteinander verbunden sein. Eine solche Ausführung des Anschlusses des Stützabschnittes an die übrigen Bestandteile des Anschlussteils erhöht zudem seine Steifigkeit.

Kostengünstig kann ein solches Anschlussteil als Stanz-Biegeteil hergestellt werden, beispielsweise aus einem mit einer Rostschutzbeschichtung versehenen Stahlblech, etwa feuerverzinkt. Das Anschlussorgan wird bei einer solchen Auslegung des Anschlussteils vorzugsweise durch zwei gegenüber einem Grundkörper an gegenüberliegenden Seiten von diesem abgekantete Schenkel bereitgestellt. Damit hat das Anschlussteil im Bereich dieser Abkantungen eine U-förmige Querschnittsgeometrie. Diese Schenkel erstrecken sich von dem Grundkörper weg, und zwar von dem Klemmelement wegweisend, und weisen eine Konturierung auf, dass diese beispielsweise die Endabkantung eines Schenkels eines Trägers hintergreifen. Über eine solche hakenförmige Auslegung des Anschlussorgans können hohe Spannkräfte übertragen werden. Bei einer solchen Auslegung ist das Anschlussorgan des Anschlussteils durch zwei Anschlussorganteile gebildet, wobei durch jeden von dem Grundkörper abgekanteten Schenkel ein solches Anschlussorganteil bereitgestellt ist. **In** einem bevorzugten Ausführungsbeispiel einer solchen Auslegung des Anschlussorganes beziehungsweise des Anschlussteils sind die Anschlussorganteile durch einen Steg miteinander verbunden. Dieser Steg ist ausgerichtet, damit seine in Richtung zum Klemmelement und somit zu der der Anlagefläche des Trägers gegenüberliegenden Seite weisende Fläche eine Widerlagerfläche zur Abstützung an der Innenseite des Teils des Trägers bildet, an die die Befestigungsklemme angeschlossen ist. Durch einen solchen Steg ist nicht nur ein großflächiges Widerlager bereitgestellt, sondern zudem ist hierdurch das Anschlussteil versteift. Eine solche Ausgestaltung des Anschlussteils ist auch für Anschlussteile zweckmäßig, wenn diese nicht als Stanz-Biegeteile ausgeführt sind.

Eine Befestigungsklemme gemäß der Erfindung kann ausgebildet sein, damit diese als Seitenklemme oder als Mittelklemme eingesetzt werden kann. Die Befestigungsklemme unterscheidet sich allein durch die Auslegung seines Klemmelementes, ob diese als Seitenklemme oder als Mittelklemme verwendet wird. Bei einem Einsatz der Befestigungsklemme als Mittelklemme ist diese zwischen zwei benachbart zueinander angeordneten, langgestreckten Gegenständen, beispielsweise zwei Paneelen, etwa Photovoltaik-Modulen oder Solarpaneelen angeordnet. Als Seitenklemme wird durch diese nur ein Gegenstand am Unterlager verspannt. Bei einer Auslegung der Befestigungsklemme als Seitenklemme verfügt das Klemmelement über einen Stützschenkel, der in der Spannstellung der Befestigungsklemme auf der Stützfläche des Anschlussteils und/oder der Anlagefläche des Trägers abgestützt ist. Der Stützschenkel weist eine entsprechende Breite auf, um in einer Spannstellung zum Befestigen eines quer zur Längserstreckung des Trägers verlaufenden biegesteifen Gegenstandes sowohl auf der Anlagefläche des Trägers als auch auf der Stützfläche des Anschlussteils in der Spannstellung der Befestigungsklemme abgestützt zu sein. Eine solche Befestigungsklemme kann auch eingesetzt werden, dass alleinig der Stützschenkel des Klemmelementes auf der Stützfläche des Anschlussteils abgestützt ist. Der an dem Träger zu befestigende Gegenstand verläuft dann mit seinem zu verspannenden Randabschnitt parallel zur Längserstreckung des Trägers.

Das Klemmelement dieser als Seitenklemme einsetzbaren Befestigungsklemme kann in einer einfachen geometrischen Auslegung ein Winkelstück sein, wobei der eine Schenkel des Winkelstückes mit einem Abschnitt als Klemmfortsatz über die Oberseite des zu befestigenden Gegenstandes ragt, während der andere Schenkel der Stützschenkel zum Abstützen des Klemmelementes auf der Anlagefläche des Trägers und/oder der Stützfläche des Anschlussteils ist. Besonders vorteilhaft bei der Auslegung eines solchermaßen konzipierten Klemmelementes ist, dass über die Länge des Stützschenkels der Abstand seines Klemmfortsatzes in der vorgesehenen Spannstellung zur Anlagefläche des Trägers definierbar ist. Vorzugsweise ist ein solcher Stützschenkel ausgelegt, damit dieser mit seiner zum Anschlussteil weisenden Stirnkante auf der Anlagefläche des Profils und/oder der Stützfläche des Anschlussteils abgestützt ist. Oftmals sind mit derartigen Klemmen zu befestigende Gegenstände, wie beispielsweise Photovoltaik-Module oder Solarpaneele in vordefinierten Dicken verfügbar. In Anpassung an die Dicke eines zu montierenden Moduls werden die Befestigungsklemmen dann mit einem Klemmelement mit einer auf die Dicke des zu montierenden Moduls abgestimmten Länge des Stützschenkels ausgerüstet. Dieses kann herstellerseitig mit einfachen Mitteln und vor allem ohne zusätzliche Biegewerkzeuge für die Herstellung des Klemmelementes zu benötigen, schlichtweg durch entsprechendes Ablängen vorgenommen werden.

Um bei einem solchen Klemmelement die Steifigkeit zu erhöhen, ist dieses, insbesondere wenn als Stanz-Biegeteil ausgeführt, durch Sicken in beziehungsweise entgegen der Spannwirkrichtung versteift. Beispielsweise kann ein solches Klemmelement zwei voneinander beabstandete, der Winkelgeometrie des Klemmelementes folgende Sicken aufweisen. Zur weiteren Versteifung des Klemmelementes ist in einem Ausführungsbeispiel vorgesehen, dass dieses einen Absatz zwischen seinem Klemmfortsatz und seinem Stützschenkel aufweist. Ein solcher Absatz ist gegenüber dem oberen Abschluss des Klemmelementes in Richtung zum Anschlussteil hin zurückversetzt. Auf diesen Absatz wirkt das Spannmittel beim Spannen des Klemmelementes gegenüber dem Anschlussteil mit seinem Kopf. Typischerweise verfügt der Absatz über eine Durchbrechung, den der Schaft eines Spannbolzens, wenn als Spannmittel eingesetzt, durchgreift. Vorteilhaft an der Ausbildung eines solchen Klemmelementes ist ferner, dass die Höhe des Absatzes so eingerichtet sein kann, dass der Kopf eines als Spannmittel eingesetzten Spannbolzens nicht über den oberen Abschluss des Klemmelementes hinausragt. Zusätzlich wirkt eine solche absatzbildende Struktur versteifend.

Ein als Spannmittel eingesetzter Spannbolzen ist gemäß einem Ausführungsbeispiel durch eine von dem Bolzenschaft durchgriffene Sperrscheibe unverlierbar an dem Klemmelement gehalten. Ein solches Spannmittel kämmt mit seinem Gewindeschaft gemäß einem Ausführungsbeispiel einen Innengewindedurchzug des Anschlussteils. Anstelle eines Innengewindedurchzuges kann das Anschlussteil auch eine entsprechende Mutter tragen. Damit die Befestigungsklemme jedoch möglichst wenig Einzelteile aufweist, ist als Gegengewinde zu dem Gewindeschaft eines Spannbolzens ein Innengewindedurchzug am Anschlussteil bevorzugt.

In einer Weiterbildung einer solchen Befestigungsklemme ist vorgesehen, dass diese zusätzlich zu ihrem Klemmelement und ihrem Anschlussteil über ein Zwischenelement verfügt. Dieses kann dem Zweck dienen, dass ein Materialkontakt zwischen dem Anschlussteil der Befestigungsklemme sowie der Anlagefläche des Trägers - einerseits - und dem zu befestigenden Gegenstand - andererseits - vermieden ist, beispielsweise um Kontaktkorrosionserscheinungen auszuschalten. Bei einem aus einem verzinkten Stahlblech hergestellten Anschlussteil kann das Zwischenelement, etwa wenn ein Photovoltaik-Modul oder ein Solarpaneel mit der Befestigungsklemme befestigt werden soll, beispielsweise aus einem rostfreien Stahl, insbesondere aus einem rostfreien Federstahl hergestellt sein. Dann dient das Zwischenelement ebenfalls zum Bereitstellen eines Potenzialausgleiches. Zum Verbessern einer elektrischen Kontaktierung kann das Zwischenelement in Richtung zu dem zu befestigenden Gegenstand abragende Eindrückkrallen aufweisen, bereitgestellt, beispielsweise durch eine entsprechende Abkantung von Ecken. Ein solches Zwischenelement kann, wenn ein Potenzialausgleich nicht erforderlich ist, auch aus anderem Material hergestellt sein, beispielsweise aus Kunststoff.

In einem bevorzugten Ausführungsbeispiel erstreckt sich ein solches Zwischenelement, aus Richtung der Spannwirkachse gesehen, über den trägerseitigen Abschluss des Anschlussorgans des Anschlussteils hinaus. In einem solchen Fall hat das Zwischenelement vorzugsweise gewisse elastische Eigenschaften was beispielsweise gegeben ist, wenn das Zwischenelement aus einem rostfreien Federstahl hergestellt ist. Das an dem Anschlussteil gehaltene Zwischenelement kann dann auch einer Montageerleichterung dienen, da durch dieses eine Vormontageposition der Befestigungsklemme fixiert werden kann, wenn diese an den Träger angeschlossen, jedoch noch nicht verspannt ist. Die noch nicht gespannte Befestigungsklemme kann dann mit dem über das Anschlussorgan hinausragenden Abschnitt auf den äußeren Rand der Anlagefläche eines Trägers zur Anlage gebracht werden. Unter Ausnutzung der elastischen Eigenschaften kann, sollte der Träger eine endseitige Rückkantung aufweisen, das Anschlussorgan mit seinem Widerlager durch weiteres Herabdrücken der Befestigungsklemme in seine eine solche Rückkantung aufweisenden Schenkel hintergreifende Stellung gebracht werden. Ist das Anschlussorgan in seine gewünschte Stellung gebracht, ist die Befestigungsklemme aufgrund der Halteeigenschaften des Zwischenelementes an dem Träger vormontiert, jedoch noch nicht verspannt. Handelt es sich bei dem Träger um ein C-förmiges Profil, bei dem eine Rückkantung des die Anlagefläche bereitstellenden Schenkels in Bezug auf die quer zur Längserstreckung des Trägers erfolgte Anschlussbewegung der Befestigungsklemme an den Träger, kann die Befestigungsklemme in Längserstreckung des Trägers ohne Weiteres verschoben werden, und zwar ohne, dass die Gefahr besteht, dass diese sich von dem Träger lösen würde. Dieses erleichtert eine Montage und Einrichtung der Befestigungsklemme gegenüber dem oder den zu befestigenden langgestreckten, biegesteifen Gegenständen.

Das Zwischenelement ist vorzugsweise in seinem mittleren Abschnitt in Richtung der Achse der Spannwirkung der Befestigungsklemme formschlüssig mit dem Anschlussteil verbunden. Dieses kann klippsartig, etwa durch ein eine Grundplatte des Anschlusselementes untergreifendes Anschlussorgan bereitgestellt werden, wenn zur Lagefixierung des Zwischenelementes gegenüber dem Anschlussteil das Zwischenelement ferner über einen in Richtung zum Anschlussteil abgekanteten Anschlagschenkel verfügt, der dem Verklammerungsschenkel gegenüberliegt.

Wenn im Rahmen dieser Ausführungen von Stanz-Biegeteilen die Rede ist, sind unter diese Begriffe nicht nur tatsächlich gestanzte Teile zu verstehen, sondern selbstverständlich auch lasergeschnittene beziehungsweise laserausgeschnittene oder anderweitig aus einer Platine herausgetrennte Werkstücke.

Nachfolgend ist die Erfindung anhand von Ausführungsbeispielen unter Bezugnahme auf die beigefügten Figuren beschrieben. Es zeigen:
- **Fig. 1:**: Eine als Seitenklemme einzusetzende Befestigungsklemme gemäß der Erfindung nach Art einer Explosionsdarstellung mit einem Träger zum Tragen eines Photovoltaik-Moduls,
- **Fig. 2:**: eine perspektivische Ansicht der Befestigungsklemme der Figur 1 in ihrem Zusammenbau, angeschlossen an den Träger,
- **Fig. 3:**: eine Seitenansicht der Befestigungsklemme der Figur 3 mit Blickrichtung in Längserstreckung des Trägers in ihrer Spannstellung zum Befestigen eines Photovoltaik-Moduls an dem Träger,
- **Fig. 4:**: eine Draufsicht auf die Anordnung der Figur 3,
- **Fig. 5:**: eine als Mittelklemme einzusetzende Befestigungsklemme gemäß der Erfindung nach Art einer Explosionsdarstellung entsprechend derjenigen der Figur 1,
- **Fig. 6:**: eine perspektivische Ansicht der Befestigungsklemme der Figur 5 in ihrem Zusammenbau, angeschlossen an einen Träger, und
- **Fig. 7:**: eine Draufsicht auf die Anordnung der Figur 6, ergänzt um zwei durch die als Mittelklemme eingesetzte Befestigungsklemme an dem Träger befestigte Photovoltaik-Module.

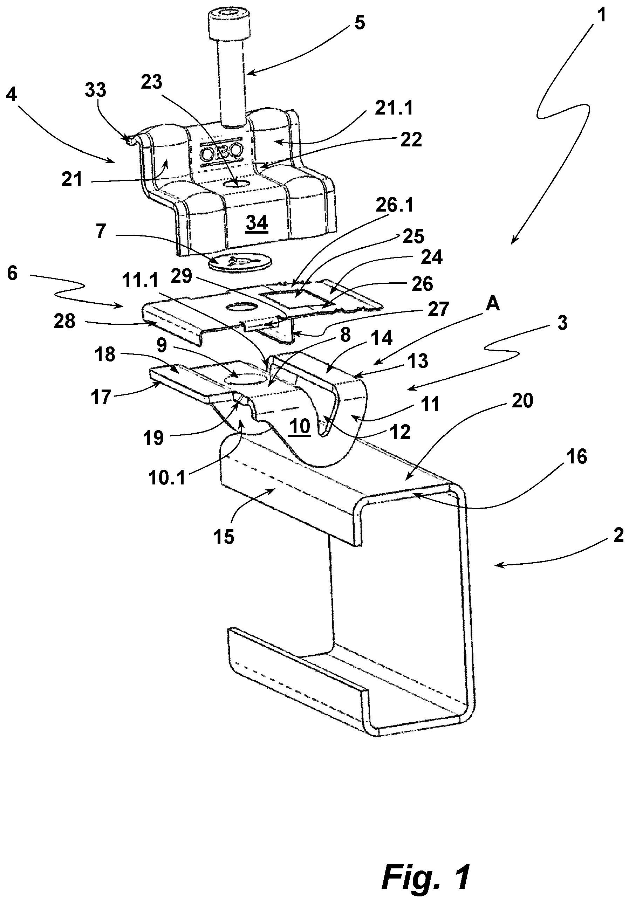

Eine Befestigungsklemme 1 dient zum Befestigen eines langgestreckten, biegesteifen Gegenstandes an einem Unterlager. Bei dem in den Figuren dargestellten Ausführungsbeispiel dient die Befestigungsklemme 1 zum Befestigen eines Photovoltaik-Moduls an einem durch mehrere Träger 2 gebildeten Unterlager. In Figur 1 ist lediglich ein Träger 2 gezeigt. Zumindest ein weiterer ist parallel und mit Abstand zu diesem angeordnet. Die Befestigungsklemme 1 umfasst ein Anschlussteil 3, ein Klemmelement 4, einen Spannbolzen 5 als Teil einer Spanneinrichtung sowie ein Zwischenelement 6. Unverlierbar gehalten ist der Spannbolzen 5 an dem Klemmelement 4 mittels einer Sperrscheibe 7.

Das Anschlussteil 3 der in den Figuren beispielhaft gezeigten Befestigungsklemme 1 ist als Stanz-Biegeteil ausgeführt und umfasst eine Grundplatte 8 als Grundkörper. Eingebracht in die Grundplatte 8 ist ein Innengewindedurchzug mit einem zu dem Gewinde des Spannbolzens 5 komplementären Innengewinde. Damit bildet der Innengewindedurchzug 9 das zweite Teil der aus Spannbolzen 5 und Innengewindedurchzug 9 gebildeten Spanneinrichtung. Von dem Grundkörper 8 ist an einander gegenüberliegende Seiten jeweils ein Schenkel 10, 10.1, rechtwinklig von dem Klemmelement 4 wegweisend, abgekantet. Diese setzen sich jeweils in ein Anschlussorganteil 11, 11.1 fort. Die Anschlussorganteile 11, 11.1 bilden aufgrund eines Ausschnittes 12 zusammen mit einem die Enden der beiden Anschlussorganteile 11, 11.1 verbindenden Steg 13 ein hakenförmiges Anschlussorgan A. Die in Figur 1 erkennbare Oberseite des Steges 13 bildet eine Widerlagerfläche 14. Diese befindet sich bei dem dargestellten Ausführungsbeispiel in derselben Ebene wie die Oberseite der Grundplatte 8. Der Ausschnitt 12 weist eine Tiefe und Weite auf, damit das durch die Anschlussorganteile 11, 11.1 und den Steg 13 gebildete Anschlussorgan eine Rückkantung 15 des in Figur 1 oberen Schenkels 16 des Trägers 2 hintergreifen kann. An seiner dem Steg 13 gegenüberliegenden Seite ist an die Grundplatte 8 ein Stützabschnitt 17 angeformt, dessen Oberseite eine Stützfläche 18 bereitstellt. Die Ebene der Stützfläche 18 verläuft parallel zu der Ebene der Oberseite der Grundplatte 8. Der Stützabschnitt 17 ist unter Zwischenschaltung einer Verkröpfung 19 an die Grundplatte 8 angeformt. Die Sprunghöhe der Verkröpfung 19 und damit der Höhenabstand zwischen der Oberseite der Grundplatte 8 und der Stützfläche 18 entspricht der Materialstärke des Schenkels 16 des Trägers 2. Damit befindet sich die Stützfläche 18 des Anschlussteils 3 in derselben Ebene wie der durch eine Anlagefläche 20 bereitgestellte obere Abschluss des Trägers 2.

Der Träger 2 ist C-förmig profiliert. Der in Figur 1 obere Schenkel 16 stellt mit seiner Oberseite eine Anlagefläche 20 für ein von dem Träger 2 zu tragendes Photovoltaik-Modul dar.

Das Klemmelement 4 ist bei dem dargestellten Ausführungsbeispiel ebenfalls ein Stanz-Biegeteil. Das Klemmelement 4 ist ein gestuft ausgeführtes Winkelstück. Zur Versteifung des Klemmelementes 4 sind in dieses mit geringem Abstand zu dem Rand in Richtung der Profilierung verlaufende Sicken 21, 21.1 eingebracht. Durch diese gestufte Ausbildung ist ein Absatz 22 gebildet. Zwischen den beiden Sicken 21, 21.1 ist in den Absatz 22 eine Durchbrechung 23 eingebracht, durch die der Schaft des Spannbolzens 5 hindurchreicht. Auf der Oberseite des Absatzes 22 ist der Kopf des Spannbolzens 5 abgestützt. Die Sperrscheibe 7 befindet sich sodann an der Unterseite des Absatzes 22. Der obere Schenkel stellt einen Klemmfortsatz bereit. Mit diesem überragt das Klemmelement 4 einen an den Träger 2 zu befestigenden Gegenstand, beispielsweise ein Photovoltaik-Modul.

Während das Anschlussteil 3 und das Klemmelement 4 jeweils aus einem verzinkten Stahlblech hergestellt sind, ist das Zwischenelement 6 aus einem rostfreien Federstahl hergestellt. Auch hierbei handelt es sich um ein Stanz-Biegeteil. Das Zwischenelement 6 erstreckt sich über die in Figur 1 nach oben weisende Seite des Anschlussteils 3 und ragt mit einem Abschnitt 24 über das in Richtung zum Träger 2 weisende Ende des die Widerlagerfläche 14 bereitstellenden Steges 13 hinaus. **In** das Zwischenelement 6 ist eine rechteckförmige Öffnung 25 eingebracht. Die den Abschnitt 24 mit den übrigen Bestandteilen des Zwischenelementes 6 verbindenden Schenkel 26, 26.1 stellen Federschenkel dar. Zur Ausbildung der Öffnung 25 ist das diesbezügliche Material gegenüber der Ebene des Zwischenelementes 6 nach unten in Richtung zum Anschlussteil 3 abgekantet und zu einem Verklammerungsschenkel, da an seinem unteren Ende in Richtung von den Abschnitt 24 wegweisend abgekantet, geformt. Der Verklammerungsschenkel 27 dient zum Untergreifen der Grundplatte 8 des Anschlussteils 3. Das Zwischenelement 6 umfasst ferner einen Abschnitt, der sich über die Grundplatte 8 und den Stützabschnitt 18 erstreckt. An dem dem Verklemmungsschenkel 27 gegenüberliegenden Ende trägt das Zwischenelement einen in Richtung zum Anschlussteil 3 abgekanteten Anschlagschenkel 28. Dessen Innenseite liegt an der in Figur 1 nach links weisende Stirnfläche des Stützabschnittes 17 des Anschlussteils 3 an. Zum Ausgleich des Höhenversprunges zwischen der Oberseite der Grundplatte 8 des Anschlussteils 3 und seiner Stützfläche 18 trägt das Zwischenelement 6 an seinen Seitenflächen jeweils einen Stützschenkel 29, der auf der Grundplatte 8 aufsteht.

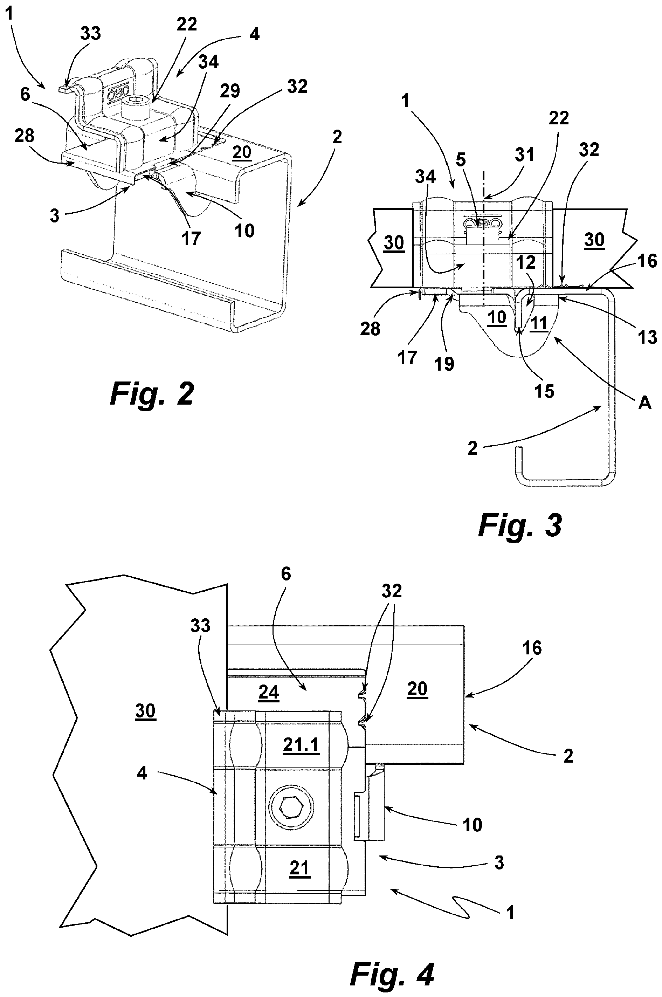

Die Abstützung des Zwischenelementes 6 auf der Grundplatte 8 des Anschlussteils sowie das Umgreifen des Stützabschnittes 17 durch den Anschlagschenkel 28 ist in der perspektivischen Darstellung des Befestigungsklemme 1 der Figur 2 zu erkennen. Diese zeigt die Befestigungsklemme 1 in ihrer Befestigungsstellung, jedoch ohne ein in dieser Stellung an dem Träger 2 befestigtes Photovoltaik-Modul.

In der Seitenansicht der Figur 3 ist das mit der Befestigungsklemme 1 an dem Träger 2 befestigte Photovoltaik-Modul 30 dargestellt. Diese Darstellung verdeutlicht die Wirkungsweise der Befestigungsklemme 1. Strichpunktiert eingetragen ist in dieser Figur die Spannwirkachse 31 der Spanneinrichtung. Diese verläuft entlang der Achse des Spannbolzens 5. **In** dieser Darstellung ist auch die Abstützung des Kopfes des Spannbolzens 5 auf der Oberseite des Absatzes 22 des Klemmelementes 4 erkennbar. Das durch die Anschlussorganteile 11, 11.1 und den diese verbindende Steg 13 gebildete Anschlussorgan hintergreift die Rückkantung 15 des Schenkels 16 des Trägers 2, sodass das Anschlussteil 3 auf diese Weise in Profilquerrichtung mit dem Träger 2 in Eingriff gestellt ist. Die Rückkantung 15 greift ein in den Ausschnitt 12 des Anschlussteils 3. Die Widerlagerfläche 14 ist an der Innenseite des Schenkels 16 des Trägers 2 abgestützt. Die Spannwirkachse der Befestigungsklemme 1 befindet sich außerhalb des Trägers 2. Dieses ist zum Verspannen der Befestigungsklemme 1 unproblematisch, da die biegesteifen Eigenschaften des Photovoltaik-Moduls 30 beziehungsweise seines Rahmens eine ansonsten mögliche Verstellung der Befestigungsklemme 1 beim Spannen unterbinden. Das Photovoltaik-Modul 30 liegt auf der Oberseite des Zwischenelementes 6 auf. Zur Verbesserung einer elektrischen Kontaktierung zwecks Potenzialausgleichs sind in demjenigen Abschnitt des Zwischenelementes 6, welches auf der Anlagefläche 20 des Trägers 2 gelangt, nach oben abragende Eindrückkrallen 32 ausgebildet.

Diese sind gut in der Draufsicht der Figur 4 auf die Anordnung der Figur 3 zu erkennen. In dieser Darstellung ist der Klemmfortsatz 33, mit dem das Klemmelement 4 auf der Oberseite des Photovoltaik-Moduls 30 abgestützt ist, gut auszumachen.

In der Spannstellung der Befestigungsklemme 1 stützt sich das Klemmelement 4 mit seinem unteren, an den Absatz 22 angeformten Stützschenkel 34 auf dem Zwischenelement 6 und dieses wiederum auf der Stützfläche 18 des Anschlussteils 3 sowie der Anlagefläche 20 des Trägers 2 ab. Die Breite des Klemmelementes 4 ist ausgelegt, damit sich dieses von der Anlagefläche 20 des Trägers 2 bis über die Stützfläche 18 des Stützabschnittes 17 erstreckt (siehe auch Figur 2).

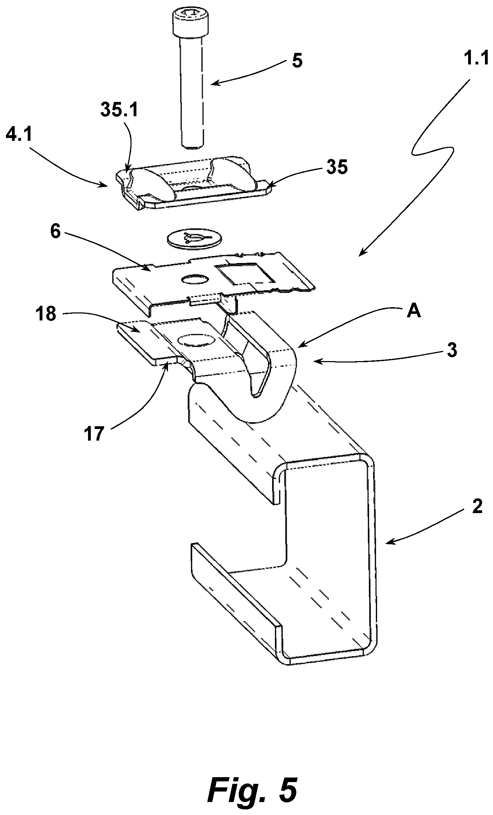

Figur 5 zeigt eine weitere Befestigungsklemme 1.1, die als Mittelklemme ausgelegt ist. Die Befestigungsklemme 1.1 entspricht hinsichtlich ihres Aufbaus mit Ausnahme ihres Klemmelementes 4.1 demjenigen der Befestigungsklemme 1 der Figuren 1 bis 4. Zur Vereinfachung der Identifizierung der einzelnen Bestandteile sind bei der Befestigungsklemme 1.1 dieselben Teile mit denselben Bezugszeichen wie bei der Befestigungsklemme 1 angegeben. Da mit Ausnahme des Klemmelementes 4.1 die übrigen Bestandteile identisch sind mit denjenigen der Befestigungsklemme 1, wird nachfolgend nur auf die Unterschiede im Klemmelement 4.1 eingegangen. Im Übrigen gelten die Ausführungen zu der Befestigungsklemme 1 gleichermaßen für die Befestigungsklemme 1.1.

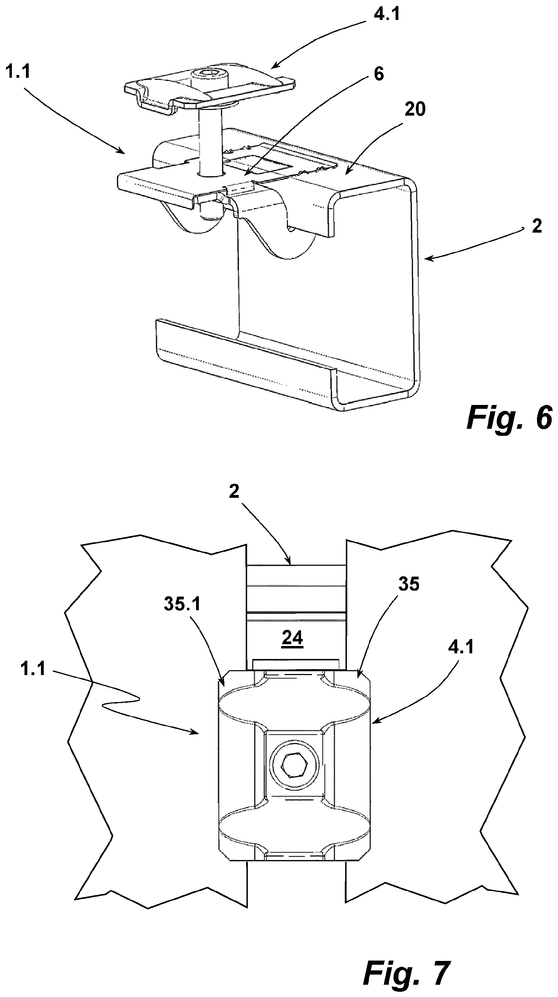

Da die Befestigungsklemme 1 als Mittelklemme ausgelegt ist, verfügt ihr Klemmelement 4.1 nicht über eine Abstützung an dem Träger 2 beziehungsweise dem Stützabschnitt 17 des Anschlussteils 2. Das Klemmelement 4.1 verfügt über zwei einander gegenüberliegende Klemmfortsätze 35, 35.1, deren Unterseite zur Anlage jeweils eines Photovoltaikmoduls 30.1,0 30.2 dient. Die Montage als Zwischenklemme der Befestigungsklemme 1.1 ist in der Draufsicht der Figur 7 erkennbar. Mit jeweils einem Klemmfortsatz 35 beziehungsweise 35.1 greift das Klemmelement 4.1 der Befestigungsklemme 1.1 jeweils über den Rand jeweils eines Photovoltaikmoduls 30.1, 30.2. Ein Verkippen der Befestigungsklemme 1.1 beim Spannen derselben zum Befestigen der Photovoltaik-Module 30.1, 30.2 an dem Träger 2 ist auch bei dieser Ausgestaltung durch die biegesteifen Eigenschaften der Photovoltaik-Module 30.1, 30.2 wirksam unterbunden.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass dieses im Rahmen dieser Ausführungen näher erläutert werden müsste.

### Bezugszeichenliste

| | | | |
|---|---|---|---|
| 1, 1.1 | Befestigungsklemme | 31 | Spannwirkachse |
| 2 | Träger | 32 | Eindrückkralle |
| 3 | Anschlussteil | 33 | Klemmfortsatz |
| 4, 4.1 | Klemmelement | 34 | Stützschenkel |
| 5 | Spannbolzen | 35, 35.1 | Klemmfortsatz |
| 6 | Zwischenelement | | |
| 7 | Sperrscheibe | A | Anschlussorgan |
| 8 | Grundplatte | | |
| 9 | Innengewindedurchzug | | |
| 10, 10.1 | Schenkel | | |
| 11, 11.1 | Halteelement | | |
| 12 | Einschnitt | | |
| 13 | Steg | | |
| 14 | Widerlagerfläche | | |
| 15 | Rückkantung | | |
| 16 | Schenkel | | |
| 17 | Stützabschnitt | | |
| 18 | Stützfläche | | |
| 19 | Verkröpfung | | |
| 20 | Anlagefläche | | |
| 21, 21.1 | Sicke | | |
| 22 | Absatz | | |
| 23 | Durchbrechung | | |
| 24 | Abschnitt | | |
| 25 | Öffnung | | |
| 26, 26.1 | Federschenkel | | |
| 27 | Verklammerungsschenkel | | |
| 28 | Anschlagschenkel | | |
| 29 | Stützschenkel | | |
| 30, 30.1, 30.2 | Photovoltaik-Modul | | |

## Patentansprüche

1. Befestigungsklemme zum Befestigen eines langgestreckten, biegesteifen Gegenstandes, etwa eines Trägerprofiles, eines Paneels, etwa eines Photovoltaik-Moduls, einer Komponente dafür oder dergleichen, an einer aus typischerweise mehreren Trägern (2) gebildeten Unterkonstruktion, umfassend:
- ein Klemmelement (4, 4.1) mit einem zur Anlage an einem zu befestigenden Gegenstand (30; 30.1, 30.2) vorgesehenen Klemmfortsatz (33; 35, 35.1),
- ein Anschlussteil (3) mit einem Anschlussorgan (A) zum Abstützen der Befestigungsklemme (1, 1.1) an einem Widerlager des Trägers (2) der Unterkonstruktion, wobei das Widerlager in die entgegengesetzte Richtung einer durch den Profilträger (2) bereitgestellten Anlagefläche (20), auf dem der zu befestigende Gegenstand aufzulegen ist, weist, welches Anschlussorgan (A) ein Widerlager zum Untergreifen des Trägers (2) zur Abstützung an dem Widerlager des Trägers (2) und das Anschlussteil (3) einen benachbart zu dem seitlichen Abschluss des Trägers (2) befindlichen Stützabschnitt (18) aufweisen, der bei an dem Träger (2) befestigter Befestigungsklemme (1, 1.1) gegen den zu befestigenden Gegenstand (30; 30.1, 30.2) und/oder einen Stützschenkel (34) des Klemmelements (4, 4.1) wirkt, und
- eine Spanneinrichtung (5, 7) zum Spannen des an einem zu befestigenden Gegenstand (30; 30.1, 30.2) abgestützten Klemmelementes (4, 4.1) gegenüber dem Anschlussteil (3), sodass eine Klemmkraft über das Klemmelement (4, 4.1) auf den zu befestigenden Gegenstand (30; 30.1, 30.2) aufbringbar ist, welche Spanneinrichtung über ein Spannmittel (5) verfügt, dessen Spannwirkachse (31) bei an dem Träger (2) befestigter Befestigungsklemme (1, 1.1) an dem seitlichen Abschluss des Trägers (2) vorbeigeführt ist, wobei das anschlussteilseitige Widerlager (14) Teil eines hakenförmig ausgelegten Anschlussteils (3) zum Hintergreifen einer Rückkantung des Trägers (2) ist und das freie Ende eines solchen hakenförmigen Anschlussorgans (A) das Widerlager zum Abstützen an derjenigen Schenkelinnenseite des Trägers (2) bildet, der mit seiner Außenseite die Anlagefläche (20) bereitstellt.

2. Befestigungsklemme nach Anspruch 1, **dadurch gekennzeichnet, dass** sich die Stützfläche (18) bei an einem Träger (2) angeschlossener Befestigungsklemme (1, 1.1) in derselben Ebene befindet wie eine durch den Träger (2) zur Auflage des Gegenstandes (30; 30.1, 30.2) bereitgestellte Auflagefläche (20).

3. Befestigungsklemme nach Anspruch 1 oder 2, **dadurch gekennzeichnet, dass** das Anschlussteil (3) ein Stanz-Biegeteil ist, bei dem das Anschlussorgan (A) durch zwei gegenüber einem Grundkörper (8) an einander gegenüberliegenden Seiten abgekantete Schenkel (10, 10.1) bereitgestellt ist und die freien, zur Ausbildung des den Träger (2) untergreifenden Widerlagers bildenden Enden durch einen eine Widerlagerfläche (14) bereitstellenden Steg (13) miteinander verbunden sind.

4. Befestigungsklemme nach Anspruch 3, **dadurch gekennzeichnet, dass** die Stützfläche (18) unter Zwischenschaltung einer Verkröpfung (19) an die übrigen Bestandteile des Anschlussteils (3) angeformt ist, wobei die Sprunghöhe der Verkröpfung (19) ausgeführt ist, damit sich bei an den Träger (2) angeschlossener Befestigungsklemme (1, 1.1) die Stützfläche (18) in derselben Ebene befindet wie die Anlagefläche (20) des Trägers (2).

5. Befestigungsklemme nach einem der Ansprüche 1 bis 4, **dadurch gekennzeichnet, dass** das Klemmelement (4) zur Verwendung der Befestigungsklemme (1) als Seitenklemme über einen Stützschenkel (34) verfügt, der in der Spannstellung der Befestigungsklemme (1) auf der Stützfläche (18) des Anschlussteils (3) abgestützt ist.

6. Befestigungsklemme nach Anspruch 5, **dadurch gekennzeichnet, dass** der Stützschenkel (34) in der Spannstellung der Befestigungsklemme (1) zusätzlich auf der Anlagefläche (20) des Trägers (2) abgestützt ist.

7. Befestigungsklemme nach Anspruch 5 oder 6, **dadurch gekennzeichnet, dass** der Stützschenkel (34) mit seiner zum Anschlussteil (3) weisenden Stirnfläche auf der Stützfläche (18) des Anschlussteils (3) abstützbar ist.

8. Befestigungsklemme nach einem der Ansprüche 5 bis 7, **dadurch gekennzeichnet, dass** das Klemmelement (4) einen in Richtung zum Anschlussteil (3) gegenüber seinem oberen Abschluss versetzten Absatz (22) zwischen seinem Klemmfortsatz (33) und seinem Stützschenkel (34) aufweist, auf den das Spannmittel (5) beim Spannen des Klemmelementes (4) gegenüber dem Anschlussteil (3) wirkt.

9. Befestigungsklemme nach einem der Ansprüche 1 bis 8, **dadurch gekennzeichnet, dass** das Spannmittel ein Spannbolzen (5) mit einem am Klemmelement (4) abgestützten Kopf und mit einem Gewindeschaft ist, der mit einem Innengewindedurchzug (9) des Anschlussteils (3) kämmt.

10. Befestigungsklemme nach einem der Ansprüche 1 bis 9, **dadurch gekennzeichnet, dass** die Befestigungsklemme (1, 1.1) ferner über ein in die Spannanordnung zwischen dem zu befestigenden Gegenstand (30; 30.1, 30.2) und der Stützfläche (18) des Anschlussteils (3) und/oder der Anlagefläche (20) des Profils (2) eingeschaltetes Zwischenelement (6) verfügt.

11. Befestigungsklemme nach Anspruch 10, **dadurch gekennzeichnet, dass** das Zwischenelement (6) am Anschlussteil (3) gehalten ist.

12. Befestigungsklemme nach Anspruch 11, **dadurch gekennzeichnet, dass** das Zwischenelement (6) durch eine Clipsverbindung an dem Anschlussteil (3) gehalten ist, wobei bevorzugt das Zwischenelement (6) über die für die Clipsverbindung notwendigen elastischen Abschnitte (27) verfügt.

13. Befestigungsklemme nach einem der Ansprüche 10 bis 12, **dadurch gekennzeichnet, dass** das Zwischenelement (6) in Richtung seiner Erstreckung zu dem Träger (2) eine größere Erstreckung aufweist als das Anschlussorgan (A) des Anschlussteils (3).

14. Befestigungsanordnung umfassend
- einen Träger (2) als Teil einer Unterkonstruktion,
- einem auf dem Träger (2) aufliegenden langgestreckten, biegesteifen Gegenstand (30; 30.1, 30.2) und
- wenigstens eine Befestigungsklemme (1, 1.1) nach einem der Ansprüche 1 bis 13,
- welche Befestigungsklemme (1, 1.1) an einem Träger (2) der Unterkonstruktion durch Untergreifen des eine Anlagefläche (20) des Trägers (2) bereitstellenden Schenkels (16) und Hintergreifen einer Rückkantung (15) des Trägers (2) angeschlossen, mit dem Widerlager (14) seines Anschlussorgans (A) an der von der Anlagefläche (20) wegweisenden Seite des Schenkels (16) des Trägers (2) abgestützt ist und ferner der zu befestigende Gegenstand (30; 30.1, 30.2) und/oder ein Stützschenkel (34) des Klemmschenkels (4) der Befestigungsklemme (1) auf der von dem seitlichen Abschluss des die Befestigungsklemme (1, 1.1) tragenden Schenkels (16) des Trägers (2) beabstandeten Stützfläche (18) des Anschlussteils (3) abgestützt ist.

## Claims

1. A fastening clamp for fastening an elongated, rigid object, such as a support profile, a panel, such as a photovoltaic module, a component therefor or the like, to a substructure typically formed from a plurality of supports (2), comprising:
- a clamping element (4, 4.1) with a clamping extension (33; 35, 35.1) intended for attachment to an object (30; 30.1, 30.2) to be fastened,
- a connecting part (3) with a connecting element (A) for supporting the fastening clamp (1, 1.1) on an abutment of the support (2) of the substructure, wherein the abutment points in the opposite direction of a contact surface (20) provided by the profile support (2), on which the object to be fastened is to be placed, which connecting element (A) has an abutment for engaging under the support (2) for support on the abutment of the support (2), and the connecting part (3) has a support section (18) located adjacent to the lateral end of the support (2), which, when the fastening clamp (1, 1.1) is fastened to the support (2), acts against the object to be fastened (30; 30.1, 30.2) and/or a support leg (34) of the clamping element (4, 4.1), and
- a clamping device (5, 7) for clamping the clamping element (4, 4.1), which is supported on an object (30; 30.1, 30.2) to be fastened, relative to the connecting part (3), so that a clamping force can be applied via the clamping element (4, 4.1) to the object (30; 30.1, 30.2) to be fastened, which clamping device has a clamping means (5), the clamping axis (31) of which, when the fastening clamp (1, 1.1) is fastened to the support (2), is guided past the lateral end of the support (2), wherein the abutment (14) on the connecting part side is part of a hook-shaped connecting part (3) for engaging behind a rear edge of the support (2), and the free end of such a hook-shaped connecting element (A) forms the abutment for support on that inner side of the leg of the support (2) which, with its outer side, provides the contact surface (20).

2. The fastening clamp according to claim 1, **characterized in that** the support surface (18) when the fastening clamp (1, 1.1) is connected to a support (2) is located in the same plane as a contact surface (20) provided by the support (2) for supporting the object (30; 30.1, 30.2).

3. The fastening clamp according to claim 1 or 2, **characterized in that** the connecting part (3) is a stamped and bent part, in which the connecting element (A) is provided by two legs (10, 10.1) which are bent on opposite sides relative to a base body (8), and the free ends which form the abutment which engages underneath the support (2) are connected to one another by a web (13) which provides an abutment surface (14).

4. The fastening clamp according to claim 3, **characterized in that** the support surface (18) is formed onto the remaining components of the connecting part (3) with the interposition of a crank (19), wherein the jump height of the crank (19) is designed so that when the fastening clamp (1, 1.1) is connected to the support (2), the support surface (18) is located in the same plane as the contact surface (20) of the support (2).

5. The fastening clamp according to any one of claims 1 to 4, **characterized in that** the clamping element (4) for using the fastening clamp (1) as a side clamp has a support leg (34) which is supported on the support surface (18) of the connecting part (3) in the clamping position of the fastening clamp (1).

6. The fastening clamp according to claim 5, **characterized in that** the support leg (34) is additionally supported on the contact surface (20) of the support (2) in the clamping position of the fastening clamp (1).

7. The fastening clamp according to claim 5 or 6, **characterized in that** the support leg (34) can be supported with its end face facing the connecting part (3) on the support surface (18) of the connecting part (3).

8. The fastening clamp according to one of claims 5 to 7, **characterized in that** the clamping element (4) has a shoulder (22) offset in the direction of the connecting part (3) relative to its upper end between its clamping extension (33) and its support leg (34), on which shoulder the clamping means (5) acts when clamping the clamping element (4) relative to the connecting part (3).

9. The fastening clamp according to one of claims 1 to 8, **characterized in that** the clamping means is a clamping bolt (5) with a head supported on the clamping element (4) and with a threaded shaft which meshes with an internal thread passage (9) of the connecting part (3).

10. The fastening clamp according to any one of claims 1 to 9, **characterized in that** the fastening clamp (1, 1.1) further comprises an intermediate element (6) inserted into the clamping arrangement between the object to be fastened (30; 30.1, 30.2) and the support surface (18) of the connecting part (3) and/or the contact surface (20) of the profile (2).

11. The fastening clamp according to claim 10, **characterized in that** the intermediate element (6) is held on the connecting part (3).

12. The fastening clamp according to claim 11, **characterized in that** the intermediate element (6) is held on the connecting part (3) by a clip connection, wherein the intermediate element (6) preferably has the elastic sections (27) necessary for the clip connection.

13. The fastening clamp according to any one of claims 10 to 12, **characterized in that** the intermediate element (6) has a greater extension in the direction of its extension to the support (2) than the connecting element (A) of the connecting part (3).

14. A fastening arrangement comprising
- a support (2) as part of a substructure,
- an elongated, rigid object (30; 30.1, 30.2) resting on the support (2) and
- at least one fastening clamp (1, 1.1) according to any one of claims 1 to 13,
- which fastening clamp (1, 1.1) is connected to a support (2) of the substructure by engaging under the leg (16) providing a contact surface (20) of the support (2) and engaging behind a rear edge (15) of the support (2), is supported with the abutment (14) of its connecting element (A) on the side of the leg (16) of the support (2) facing away from the contact surface (20), and furthermore the object to be fastened (30; 30.1, 30.2) and/or a supporting leg (34) of the clamping leg (4) of the fastening clamp (1) is supported on the supporting surface (18) of the connecting part (3) spaced from the lateral end of the leg (16) of the support (2) carrying the fastening clamp (1, 1.1).

## Revendications

1. Pince de fixation pour fixer un objet allongé et rigide, tel qu'un profilé de support, un panneau, tel qu'un module photovoltaïque, un composant de celui-ci ou similaire, à une sous-structure généralement constituée d'une pluralité de supports (2), comprenant :
- un élément de serrage (4, 4.1) avec une extension de serrage (33 ; 35, 35.1) destinée à s'engager avec un objet (30 ; 30.1, 30.2) à fixer,
- une pièce de liaison (3) avec un élément de liaison (A) pour soutenir la pince de fixation (1, 1.1) sur une butée du support (2) de la sous-structure, dans laquelle la butée pointe dans la direction opposée d'une surface de contact (20) fournie par le support de profilé (2) sur lequel l'objet à fixer doit être placé, lequel élément de liaison (A) présente une butée destinée à venir en prise sous le support (2) pour s'appuyer sur la butée du support (2) et la partie de liaison (3) présente une section de support (18) située à côté de l'extrémité latérale du support (2), qui, lorsque la pince de fixation (1, 1.1) est fixée au support (2), agit contre l'objet à fixer (30 ; 30.1, 30.2) et/ou une branche d'appui (34) de l'élément de serrage (4, 4.1), et
- un dispositif de serrage (5, 7) pour serrer l'élément de serrage (4, 4.1) supporté sur un objet (30 ; 30.1, 30.2) à fixer par rapport à la pièce de liaison (3), de sorte qu'une force de serrage peut être appliquée à l'objet à fixer (30 ; 30.1, 30.2) via l'élément de serrage (4, 4.1), lequel dispositif de serrage dispose d'un moyen de serrage (5) dont l'axe de serrage (31) est guidé au-delà de l'extrémité latérale du support (2) lorsque la pince de fixation (1, 1.1) est fixée au support (2), dans laquelle la butée (14) du côté de la partie de connexion fait partie d'une partie de connexion en forme de crochet (3) destinée à venir en prise derrière un bord arrière du support (2) et l'extrémité libre d'un tel élément de liaison en forme de crochet (A) forme la butée pour l'appui sur le côté intérieur de la branche du support (2) qui fournit la surface de contact (20) avec son côté extérieur.

2. Pince de fixation selon la revendication 1, **caractérisée en ce que** la surface d'appui (18) est située dans le même plan qu'une surface d'appui (20) prévue par le support (2) pour supporter l'objet (30 ; 30.1, 30.2) lorsque la pince de fixation (1, 1.1) est reliée à un support (2).

3. Pince de fixation selon la revendication 1 ou 2, **caractérisée en ce que** la pièce de liaison (3) est une pièce estampée et pliée, dans laquelle l'élément de liaison (A) est constitué de deux branches (10, 10.1) pliées sur des côtés opposés par rapport à un corps de base (8), et les extrémités libres formant la butée venant en prise sous le support (2) sont reliées l'une à l'autre par une âme (13) formant une surface de butée (14).

4. Pince de fixation selon la revendication 3, **caractérisée en ce que** la surface d'appui (18) est formée sur les composants restants de la pièce de liaison (3) avec l'interposition d'une manivelle (19), dans laquelle la hauteur de saut de la manivelle (19) est conçue de sorte que, lorsque la pince de fixation (1, 1.1) est reliée au support (2), la surface d'appui (18) se trouve dans le même plan que la surface de contact (20) du support (2).

5. Pince de fixation selon l'une des revendications 1 à 4, **caractérisée en ce que** l'élément de serrage (4) pour utiliser la pince de fixation (1) comme pince latérale dispose d'une branche de support (34) qui s'appuie sur la surface d'appui (18) de la pièce de liaison (3) dans la position de serrage de la pince de fixation (1).

6. Pince de fixation selon la revendication 5, **caractérisée en ce que** la branche de support (34) s'appuie en outre sur la surface de contact (20) du support (2) dans la position de serrage de la pince de fixation (1).

7. Pince de fixation selon la revendication 5 ou 6, **caractérisée en ce que** la branche de support (34) peut prendre appui avec sa face frontale tournée vers la pièce de liaison (3) sur la surface d'appui (18) de la pièce de liaison (3).

8. Pince de fixation selon l'une des revendications 5 à 7, **caractérisée en ce que** l'élément de serrage (4) présente un épaulement (22) décalé en direction de la pièce de liaison (3) par rapport à son extrémité supérieure entre son prolongement de serrage (33) et sa branche d'appui (34), épaulement sur lequel agit le moyen de serrage (5) lors du serrage de l'élément de serrage (4) par rapport à la pièce de liaison (3).

9. Pince de fixation selon l'une des revendications 1 à 8, **caractérisée en ce que** le moyen de serrage est un boulon de serrage (5) avec une tête prenant appui sur l'élément de serrage (4) et avec une tige filetée qui s'engrène avec un passage de filetage intérieur (9) de la pièce de liaison (3).

10. Pince de fixation selon l'une des revendications 1 à 9, **caractérisée en ce que** la pince de fixation (1, 1.1) dispose en outre d'un élément intermédiaire (6) inséré dans le dispositif de serrage entre l'objet à fixer (30 ; 30.1, 30.2) et la surface d'appui (18) de la pièce de liaison (3) et/ou la surface de contact (20) du profilé (2).

11. Pince de fixation selon la revendication 10, **caractérisée en ce que** l'élément intermédiaire (6) est maintenu sur la pièce de liaison (3).

12. Pince de fixation selon la revendication 11, **caractérisée en ce que** l'élément intermédiaire (6) est maintenu sur la pièce de liaison (3) par une liaison par clip, dans lequel l'élément intermédiaire (6) dispose de préférence des sections élastiques (27) nécessaires à la liaison par clip.

13. Pince de fixation selon l'une des revendications 10 à 12, **caractérisée en ce que** l'élément intermédiaire (6) présente une extension plus grande dans le sens de son extension vers le support (2) que l'organe de liaison (A) de la pièce de liaison (3).

14. Dispositif de fixation comprenant
- un support (2) faisant partie d'une sous-structure,
- un objet allongé et rigide (30 ; 30.1, 30.2) reposant sur le support (2) et
- au moins une pince de fixation (1, 1.1) selon l'une des revendications 1 à 13,
- laquelle pince de fixation (1, 1.1) est reliée à un support (2) de la sous-structure en venant en prise sous la branche (16) fournissant une surface de contact (20) du support (2) et en venant en prise derrière un bord arrière (15) du support (2), est supportée avec la butée (14) de son élément de liaison (A) sur le côté de la branche (16) du support (2) opposé à la surface de contact (20), et en outre l'objet à fixer (30 ; 30.1, 30.2) et/ou une branche de support (34) de la branche de serrage (4) de la pince de fixation (1) s'appuie sur la surface d'appui (18) de la pièce de liaison (3) qui est espacée de l'extrémité latérale de la branche (16) du support (2) portant la pince de fixation (1, 1.1).
